# EUROPEAN PATENT SPECIFICATION

(11) **EP 2 594 129 B1**
(45) Date of publication and mention of the grant of the patent: **03.12.2014**
(21) Application number: 12187371.5
(22) Date of filing: 05.10.2012
(51) Int. Cl.: A01K 1/01, E01H 1/00, E01H 1/10

(54) **Device and method for removing waste from a surface**
Vorrichtung zur Beseitigung von Abfall von einer Oberflache
Dispositif d'enlèvement de déchets d'une surface

(30) Priority: 21.11.2011 NL 2007829
(43) Date of publication of application: 22.05.2013
(73) Proprietor: Lely Patent N.V., 3147 PA Maassluis (NL)
(72) Inventor: Hillforth, Mikael, 3147 PA Maassluis (NL); Clements, Peter Henry, 3147 PA Maassluis (NL); Van den Beukel, Huibrecht Johannes Arjen, 3147 PA Maassluis (NL)
(74) Representative: Postma, Robert Erwin

(56) References cited:
- GB-A- 2 104 042
- US-A- 2 971 279
- US-A- 4 914 773

## Description

The invention relates to a device for removing waste from a surface, for example from a floor of an animal shed.

In practice, dairy animals are kept inside the animal shed for prolonged periods of time. The manure produced by the dairy animals ends up on the floor of the animal shed. Other waste also gathers on the animal-shed floor, such as hay, sawdust, feed, and the like. Due to the urine from the dairy animals, the manure is usually wet. The hooves of the dairy animals become soft if the dairy animals stand in wet manure for prolonged periods of time, which may give rise to inflammations. The waste on the animal-shed floor thus has an adverse effect on the health of the dairy animals. For this reason, the animal-shed floor is cleaned regularly.

WO 97/31524 discloses a device for removing manure from a floor of an animal shed. In this case, the manure is sucked up. The composition of the manure of the dairy animals can differ significantly. If the manure is relatively thick, it is difficult to remove this manure by suction. As a result, there is a risk that this thick manure is left behind on the animal-shed floor - in which case the animal-shed floor is not cleaned properly. The manure which is left behind on the animal-shed floor may over time lead to health problems for the dairy animals. In addition, the sucking mechanism is susceptible to malfunction and blockage, which does not benefit the reliability.

Document US-A-2971279 discloses a device for removing snow from a surface.

It is an object of the invention to provide an improved and preferably more reliable device for removing waste from a surface, for example from a floor of an animal shed, in particular a device which is suitable for removing relatively heavy and/or sticky waste, such as waste comprising relatively thick manure, and for relatively low-viscosity waste, such as only manure from dairy cows.

This object is achieved by a device according to claim 1 for removing waste, in particular manure, from a surface, for example from a floor of an animal shed, which device comprises a supporting frame which is displaceable across the surface, a motor which is fitted to the supporting frame, collecting strips which, viewed in an intended direction of movement, are fitted in front of the supporting frame and run towards each other at the back, and are designed to push together the manure into a space delimited by the collecting strips when the device is moving, a rotating body which is connected to the supporting frame so as to be rotatable in a direction of rotation about a substantially horizontal first rotation axis, which rotating body is drivable by the motor, a plurality of shovel scoops for scooping up waste from the surface, which shovel scoops are attached to the rotating body in the circumferential direction at a distance apart and which shovel scoops, during rotation of the rotating body, move along a path which runs at least partly along the surface, and which shovel scoops each comprise a bowl-shaped wall which delimits an internal holding space for holding scooped-up waste and which shovel scoops each comprise an open end which is directed substantially in the direction of rotation of the rotating body, wherein the first rotation axis extends substantially horizontally and forwards, and wherein the rotating body is fitted in such a manner with respect to the supporting frame that said path of the shovel scoops extends into the space delimited by the collecting strips.

An advantage of the device according to the invention is the fact that the waste is scooped up by means of a purely mechanical movement, which has been found to be more reliable than the sucking method used in the prior art, since in the case of the latter method the manure which may possibly contain coarse waste can block or damage the required pump and/or valves. In addition, it has been found that the selected direction of the rotation axis ensures that the shovel scoops move towards one of the collecting strips during and after scooping up the waste. The latter have thus not only already collected, i.e. accumulated the waste, but they can also provide a certain counterpressure during filling of the shovel scoops. As a result thereof, the filling level of the latter will be higher, and therefore a good efficiency of the device can be achieved, even with low-viscosity manure. Furthermore, it has been found to be an advantage in practice to scoop up waste in the transverse direction rather than the longitudinal direction due to the fact that, in particular with inhomogeneous waste, the waste is picked up more efficiently and the distribution of the waste which has been pushed together is improved. In addition, it could be said that the waste is more readily gripped when scooping-up takes place in the transverse direction. (mainly) when driving straight ahead that the collecting strips will push waste together. In addition, the expression "a rotation axis which extends substantially horizontally and forwards" is intended to mean that it extends horizontally or is at least intended to extend in this way, in particular within 20° to the actual horizontal, and that the axis extends parallel to a longitudinal direction of the device, i.e. the intended direction of movement when driving straight ahead, or is at least intended in this way, in particular within an angle of at most 20° to said longitudinal direction. It should furthermore be noticed that when the shovel scoops are rotated further, they will eventually assume a position which is such that the scooped-up waste can drop out of the shovel scoops again and can be collected in a receiving container or the like. All this will be explained in more detail below and/or in the description of the figures.

Specific embodiments of the device are mentioned and described below and in the dependent claims.

In particular, a wall which extends above the collecting strip is provided above at least said collecting strip which is situated on the side of the space delimited by the collecting strips where the shovel scoops move upwards during rotation. Said wall is thus situated on the side which faces the shovel scoops moving upwards which have scooped up waste. The wall can thus provide additional counterpressure, in particular up to a greater height. As a result thereof, the shovel scoops can move further upwards while the risk of them emptying is reduced. This is a particular advantage in the case of relatively liquid or loose waste, such as low-viscosity manure from dairy cows which is not mixed with straw or the like.

Advantageously, said wall extends between a peripheral path of the shovel scoops and a vertical plane at a predetermined distance from the peripheral path. Such a positioning of the wall provides counterpressure in an efficient manner. When the wall is positioned on the peripheral path, the shovel scoops and the wall contact one another. Although this does produce maximum counterpressure, due to the fact that emptying is prevented, at least towards the front, but also causes increased friction. In this case, a predetermined distance of, for example, between 1 and 10 cm, may be advantageous. Said distance may, for example, be chosen as a function of the expected type of waste. Thus, in the case of low-viscosity waste, a smaller distance will be advantageous, while in the case of coarser waste containing, for example straw, a larger distance will be more advantageous.

The wall can extend between the peripheral path and said vertical plane in several ways. In this case, the overall geometry of the device may play a part. In particular, said wall extends parallel to or concentrically with respect to the peripheral path. If the wall extends parallel to the peripheral path of the shovel scoops or is concentric therewith, the wall will be able to provide efficient counterpressure across as large a part thereof as possible.

Said wall may in principle be a part of the device which is completely separate from the collecting strips, without a direct connection between them. However, it is advantageous if the wall extends from the collecting strip and forms an integral part thereof, although it does not have to be a smooth and continuous uninterrupted integral part along the entire width. The height up to which the wall extends upwards can in principle also be chosen freely, but the height preferably extends to the point where the open end of the shovel scoops makes an angle of less than 30° to the horizontal, said open end preferably being horizontal. Such heights ensure that the shovel scoops are filled to a satisfactory level.

The device furthermore comprises a wiping device for wiping waste out of in each case one of the shovel scoops upon rotation of the rotating body. In operation, the shovel scoops of the device rotate with the driven rotating body. In this case, the shovel scoops in each case scoop up an amount of waste from the surface, which waste is pushed together by the collecting strips. Scooping up the waste is efficient for different types of waste, including relatively solid and/or sticky waste, for example waste comprising relatively thick manure, but also in particular for low-viscosity manure. If the scooped-up waste tends to stick to the shovel scoops, the wiping device ensures that the scooped-up waste is at least partly removed from the shovel scoops. As a result thereof, each shovel scoop is at least partly emptied after the waste has been scooped up, so that said shovel scoop can scoop up a subsequent amount of waste from the surface. Advantageously, but not exclusively, the wiping device is fitted to the supporting frame along the path of the shovel scoops at a position which is substantially stationary with respect to the supporting frame, which wiping device is provided with a wiping element which can be moved and driven in such a way that the wiping element, for each shovel scoop which passes the wiping device during rotation of the rotating body in each case moves from a starting position outside the path of the shovel scoops into the path of the shovel scoops, moves through the open end of said passing shovel scoop into the internal holding space of said passing shovel scoop and subsequently moves through the internal holding space of said passing shovel scoop in order to wiping at least an amount of waste scooped up by said passing shovel scoop out of the latter, and the wiping element then moves out of said passing shovel scoop and subsequently out of the path of the shovel scoops in order to allow said passing shovel scoop to pass the wiping device. With each rotation, the shovel scoops scoop an amount of waste from the surface and a portion of said amount of waste or substantially the entire amount of waste is removed from the shovel scoops. The device according to the invention is thus suitable for removing different types of waste, so that, for example, relatively thick manure can largely be prevented from being left behind on the animal-shed floor.

In an embodiment, the wiping element can be moved and driven in such a way that the wiping element, for each shovel scoop which passes the wiping device while the rotating body is rotating, in each case moves back through the path of the shovel scoops to the starting position outside the path of the shovel scoops after said passing shovel scoop has passed beyond the wiping device. The wiping element is returned to the starting position, outside the path of the shovel scoops for the approaching shovel scoop along which, viewed in the direction of rotation of the rotating body, is next behind said passing shovel scoop which has passed beyond the wiping device. As a result thereof, each shovel scoop is in each case wiped in the same manner. This simplifies the design of the wiping device and the shovel scoops and is advantageous with regard to the reliability of the device.

Incidentally, according to the invention, the wiping element can wiping out a shovel scoop both when moving from the starting position to the position out of the path of the passing shovel scoop and when moving back to the starting position. This makes it possible to increase the scooping-up speed, but does also result in a more complicated construction.

In an embodiment, the shovel scoops are spaced apart and arranged in the circumferential direction, substantially according to a circle, with the path of the shovel scoops being substantially circular. The rotating body is for example designed as a wheel which is rotatable about the substantially horizontal rotation axis, with the shovel scoops being attached to the wheel.

Incidentally, it is also possible for the rotating body not to be designed as a wheel, but to be designed differently. For example, the rotating body comprises a flexible belt, such as for example a caterpillar track. The belt, at least the path of the belt, may in this case extend substantially parallel to the surface over a predetermined distance. In this case, the shovel scoops which are attached to the belt move substantially parallel to the surface over said predetermined distance, so that the shovel scoops can scoop up waste in a particularly efficient manner. Another part of the path of the belt may likewise be round, so that the wiping device can wiping out the shovel scoops in a similar manner.

In an embodiment, the device is a vehicle, wherein the supporting frame can travel across the surface in a direction of travel. It is possible for the vehicle to comprise a driving device for driving the vehicle. However, the vehicle does not have to be self-propelled. The vehicle may furthermore be designed to be steerable in an autonomous manner. In this case, the vehicle is able to clean the surface automatically.

In an embodiment, the shovel scoops rotate from a lower scooping-up position to an upper releasing position and back during rotation of the rotating body, and wherein the wiping device is fitted near the upper releasing position of the shovel scoops. During rotation of the rotating body, the wiping element, in the upper releasing position of each shovel scoop, removes an amount of waste therefrom. As a result, the force of gravity contributes to removing waste from the shovel scoops. The shovel scoops pass the wiping device in the upper releasing position.

It is possible for the device to be provided with a collecting tray for collecting waste which drops from each shovel scoop and/or is wiped when the wiping device passes, wherein the collecting tray is provided with a collecting opening which is preferably arranged under the wiping device. The collecting opening is situated on a top side of the collecting tray. The waste which is removed from each shovel scoop by the wiping element ends up in the collecting tray. After said waste has been removed, the shovel scoop is able to scoop up an amount of waste from the surface again.

In an embodiment, the device is provided with a storage tank which is connected to the collecting tray via a passage opening, the collecting tray being provided with a displacement element for moving the waste collected in the collecting tray to the storage tank. By using the displacement element in the collecting tray, the passage opening is prevented from becoming blocked as a result of drying waste, such as relatively thick manure. This is advantageous for the reliability of the device.

It should be noted here that it is a significant advantage of the invention that the rotating body rotates substantially at right angles to the intended direction of movement. This makes it possible, via the collecting strips and optionally a wall which is arranged thereon, to provide sufficient counterpressure when filling the shovel scoops, which is not possible when scooping takes place in a forward direction. In addition, the waste receptacle and optionally the wiping device do not extend laterally from the device. As a result, the device can overall be kept compact. In particular the waste receptacle which, similar to an optional wiping device always has to extend laterally from the rotating body, is preferably not of narrow design, as this could cause poor flow behaviour to a storage tank or even danger of blockage of said waste discharge. In addition, such a discharge which is situated on the side will always comprise more bends than a discharge in a transversely rotating body which is to be arranged centrally and an optional wiping device. It will be clear that the reduced number of bends results in improved flow behaviour.

The collecting tray and the displacement element may be designed in different ways. For example, the collecting tray comprises a substantially cylindrical peripheral wall in which a lateral opening is provided in order to form the collecting opening on the top side of the collecting tray, and wherein the displacement element comprises a conveyor screw for conveying the waste collected in the collecting tray through the passage opening to the storage tank. The dimensions of the conveyor screw can be adapted to the dimensions of the substantially cylindrical peripheral wall in such a way that the waste collected in the collecting tray can be forced through the passage opening to the storage tank.

It is possible for the first rotation axis of the rotating body to run substantially parallel to the longitudinal axis of the device. In order to scoop up waste from the surface, the device is moved in the direction of the longitudinal axis, for example by driving the device designed as a vehicle across the surface. The shovel scoops which are attached to the rotating body in this case rotate about the first rotation axis which runs parallel to the longitudinal axis. The shovel scoops then move at right angles with respect to the longitudinal axis across the surface in order to scoop up waste. As a result thereof, the device can remove waste from the surface in relatively wide strips.

On the bottom side facing the surface, the supporting frame is provided with collecting strips for collecting waste which is present on the surface when moving the supporting frame across the surface. In this case, the path of the shovel scoops runs between the collecting strips. The collecting strips delimit a space in between, also referred to here as collecting chamber. When moving the supporting frame across the surface, for example by driving the device designed as a vehicle across the surface, the waste which is present on the surface is moved to the collecting chamber between the collecting strips. The waste may accumulate locally in the collecting chamber. The part of the path of the shovel scoops which borders the surface runs through the collecting chamber. The shovel scoops are situated in the bottom scooping position in the collecting chamber, between the collecting strips. As a result thereof, the shovel scoops can scoop up a relatively large amount of waste.

It is possible for the wiping element to be driven by the motor. In this case, both the rotating body and the wiping element can be driven by the motor. For example, the common motor comprises an output motor shaft which is connected to a drive belt which drives both the rotating body and the wiping element. The displacement element in the collecting tray can also be driven by the motor, for example by also connecting the displacement element to the drive belt. By using a common motor for driving the rotating body, the wiping element and, if desired, the displacement element, the costs can be limited.

In an embodiment, the wiping element is connected to the wiping device so as to be rotatable about a second rotation axis, wherein the wiping element can be moved and driven in such a way that the wiping element, when it rotates about the second rotation axis and when the rotating body rotates about the first rotation axis, carries out a complete revolution for each shovel scoop which passes the wiping device, in each case from the starting position outside the path of the shovel scoops.

From the starting position outside the path of the shovel scoops, the wiping element wipes through one of the shovel scoops by being rotated. In this case, the wiping element rotates through an angle of approximately 180°. After the wiping element has been moved out of the path of the shovel scoops, said wiped shovel scoop moves past the wiping element. At the same time, the wiping element rotates behind said wiped shovel scoop and in front of the shovel scoop which is filled with scooped-up waste and which, viewed in the direction of rotation of the rotating body, is next behind the wiped shovel scoop which has passed. In this case, the wiping element rotates through an angle of approximately 180° back to the starting position outside the path of the shovel scoops. The wiping element thus performs in each case a complete revolution between the shovel scoops, in each case wiping one of the shovel scoops in order to remove at least an amount of waste therefrom.

It is possible for the rotating body and the wiping element to be connected to the motor so as to be drivable that, when the rotating body and the wiping element are driven by the motor, the wiping element rotates about the second rotation axis N x as fast as the rotating body rotates about the first rotation axis, with N being the number of shovel scoops of the rotating body. Both the rotating body and the wiping element can in this case be driven by the common motor. The output shaft of the motor is connected to the wiping element and the rotating body, for example by means of a transmission mechanism. In this case, the transmission mechanism is designed in such a manner that the output shaft of the motor is connected at a first transmission ratio to the wiping element and at a second transmission ratio to the rotating body, with the first and second transmission ratios differing from each other by a factor N. The wiping element thus rotates at a relatively high speed of rotation between the shovel scoops, so that each passing shovel scoop is wiped.

In an embodiment, the bowl-shaped wall of each passing shovel scoop comprises a curved inner surface, the curvature of which is such that the wiping element, when it is rotated about the second rotation axis and when the rotating body rotates about the first rotation axis, moves through the internal holding space of said passing shovel scoop at a substantially constant distance from the curved inner surface in order to wiping out at least an amount of waste scooped up by said passing shovel scoop.

The substantially constant distance is, for example, approximately between 1 mm and 5 cm. By adapting the curved inner surface of the shovel scoop to the combined rotary movements of the rotating body and the wiping element, the wiping element can wiping out the shovel scoop substantially completely which is advantageous for the capacity of the device.

Incidentally, the bowl-shaped wall of the shovel scoop can be designed in different ways. For example, the bowl-shaped wall is substantially stiff. In this case, the bowl-shaped wall may be made of metal or of plastic. However, it is also possible for the bowl-shaped wall to be substantially flexible. If the wiping element, during its rotation and the rotation of the rotating body, touches the bowl-shaped wall, the bowl-shaped wall may in this case be yielded in a slightly resilient manner, thus reducing the risk of damage.

It is possible for the device to comprise a vertical longitudinal plane which is determined by a vertical plane through the horizontal first rotation axis of the rotating body, with the rotation point of the wiping element which is determined by the second rotation axis, is arranged at a distance from the vertical longitudinal plane which is greater than 0.

The wiping element is rotatable about the second rotation axis. The rotation point of the wiping element is determined by the intersection of the second rotation axis and the wiping element. The rotation point of the wiping element is situated at a distance from the vertical longitudinal plane of the device, that is to say the second rotation axis is offset with respect to the horizontal first rotation axis of the rotating body. Since the wiping element has a certain length, the rotation of the wiping element can be set by adjusting said distance so that, in the upper releasing position of the passing shovel scoop, the wiping element is situated substantially in the centre of said shovel scoop.

In an embodiment, the second rotation axis of the wiping element runs obliquely with respect to the vertical. In this case, it is possible for the second rotation axis of the wiping element to be arranged with respect to the vertical longitudinal plane at a first angle which is greater than 0, and in which said first angle is such that the second rotation axis, viewed from the vertical and viewed in a vertical transverse plane which is perpendicular to the vertical longitudinal plane, is tilted opposite to the direction of rotation of the rotating body.

The second rotation axis of the wiping element is arranged at the first angle with respect to the vertical longitudinal plane. As a result, the wiping element moves slightly from the top to the bottom when it is being rotated, from the starting position next to the path of the shovel scoops to approximately the centre position in the passing shovel scoop. While the wiping element rotates from said centre position out of the passing shovel scoop, the wiping element subsequently moves slightly from the bottom to the top. The first angle is, for example, between 0-30°.

Furthermore, the second rotation axis may extend at a second angle to the vertical transverse plane which is greater than 0, said second angle being such that the second rotation axis, viewed in the direction of movement of the supporting frame, runs obliquely downwards. Thus, the rotary movement of the wiping element can be adapted to the rotary movement of the passing shovel scoop more accurately, so that the wiping element wipes the passing shovel scoop to a relatively deep level without damaging the passing shovel scoop. The second angle is, for example, between 0-30°.

The invention also relates to a method for removing waste from a surface, for example from a floor of an animal shed, which method comprises:
- displacing a device according to the invention across the surface,
- rotating the rotating body about the substantially horizontal first rotation axis in a direction of rotation by driving the rotating body via the motor.

This method in principle describes the use of the device which has already been described. In practice, this method has been found to be very suitable to remove either low-viscosity or thick and coarse waste efficiently from the surface. In this case, optimum use can be made of the gathering effect of the collecting strips, both when pushing the waste together and when filling the shovel scoops.

In particular, the device used is in accordance with Claim 6, and the method comprises displacing the wiping element during rotation of the rotating body for each shovel scoop which passes the wiping device, in each case from a starting position outside the path of the shovel scoops into the path of the shovel scoops, through the open end of said passing shovel scoop into the internal holding space of said passing shovel scoop and subsequently through the internal holding space of said passing shovel scoop in order to wiping out at least an amount of the waste therefrom which was scooped up by said passing shovel scoop, thereafter moving the wiping element from said passing shovel scoop and subsequently away from the path of the shovel scoops in order to allow said passing shovel scoop to pass the wiping device.

This method has the same effects and advantages as have already been described above, and the above-described features can also be used with this method. In particular, the waste which has been efficiently scooped up can also be removed efficiently from the shovel scoops and collected in a waste receptacle.

The invention will now be explained in more detail with reference to an exemplary embodiment illustrated in the figures, in which:
Fig. 1 shows a perspective view of the device for removing waste from a surface according to the invention.
Figs. 2a, 2b, 2c show a top view, a front view and a side view of the device illustrated in Fig. 1.
Fig. 3a shows an enlarged detail IIIa from Fig. 2a.
Fig. 3b shows an enlarged detail IIIb from Fig. 2c.
Figs. 4a, 4b, 5a, 5b, 6a and 6b show different steps of the wiping element and a passing shovel scoop of the device illustrated in Fig. 1.

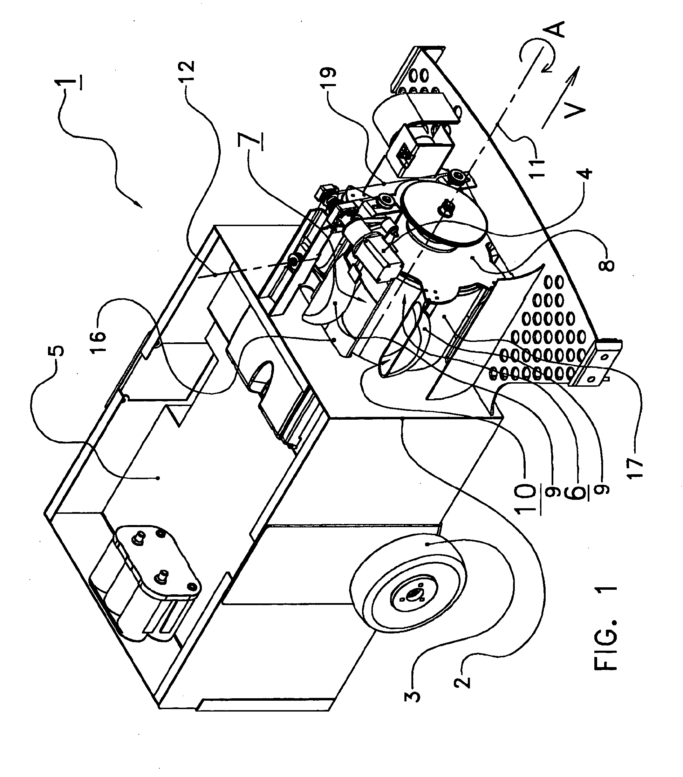

The device for removing waste from a surface illustrated in Fig. 1 is denoted overall by reference numeral 1. The device 1 is used, for example, for removing low-viscosity manure, but also relatively thick manure, from a floor of an animal shed, which has been mixed with litter. In this exemplary example, the device 1 is designed as a vehicle. The vehicle 1 comprises a supporting frame 2 and wheels 3 by means of which the vehicle 1 can be driven across the surface. In this exemplary embodiment, the wheels 3 can be driven by a driving device. The wheels 3 can each be driven independently from one another, so that the vehicle 1 can be steered. Incidentally, the vehicle 1 may also be designed not to be self-propelled.

The vehicle 1 comprises a storage tank 5 for the waste removed from the surface. Via a passage opening 16, the storage tank 5 is connected to a collecting tray 6 for collecting waste which has been scooped up from the surface by shovel scoops 9, as will be described below in more detail. At the top side, the collecting tray 6 has a collecting opening 7 through which the scooped-up waste from the shovel scoops 9 can fall into the collecting tray 6.

In this exemplary embodiment, the collecting tray 6 comprises a substantially cylindrical peripheral wall 17 which is arranged parallel to the longitudinal axis of the device. The collecting tray is closed at a front end by an end wall. The passage opening 16 which ends in the storage tank 5 is situated at an opposite rear end of the collecting tray 6. The collecting opening 7 at the top side of the collecting tray 6 forms a lateral opening in the peripheral wall 17.

The collecting tray 6 comprises a displacement element for forcing the waste collected in the collecting tray 6 through the passage opening 16 to the storage tank 5 (not shown). The displacement element can be driven by a motor 4 which is fitted on the supporting frame 2. The displacement element comprises, for example, a conveyor screw with an outer diameter which substantially corresponds to the inner diameter of the cylindrical peripheral wall 17. The displacement element prevents the passage opening 16 from becoming blocked with the scooped-up waste which comprises, for example, relatively thick and sticky manure.

The shovel scoops 9 for scooping up waste from the surface are attached to a rotating body 8 which is connected to the supporting frame 2 so as to be rotatable about a substantially horizontal first rotation axis 11 in a direction of rotation (see arrow A in Fig. 1). The first rotation axis 11 runs substantially parallel to the longitudinal axis of the vehicle 1. The rotating body 8 can be driven by the motor 4 which also drives the displacement element in the collecting tray 6.

In this exemplary embodiment, the rotating body 8 is designed as a plate-shaped rotating disc. The shovel scoops 9 are attached transversely to the rear side of said rotating disc 8. In this case, the shovel scoops 9 are spaced apart and arranged in the circumferential direction substantially according to a circle.

When the rotating body 8 rotates, the shovel scoops 9 follow a substantially circular path which partly runs adjacent to the surface. In this case, the shovel scoops 9 move from a lower scooping-up position to an upper releasing position and back. The shovel scoops 9 each comprise a bowl-shaped wall which is delimited by a peripheral wall. The peripheral wall of each shovel scoop 9 defines an open end 10 which is directed substantially in the direction of rotation A of the rotating body 8.

In the lower scooping-up position of the shovel scoops 9, the bottom section of the peripheral wall thereof moves along the surface in order to scoop up waste from the surface. On the bottom side thereof facing the surface, the supporting frame 2 is provided with collecting strips 18 for collecting waste present on the surface while moving the vehicle 1 across the surface. The path of the shovel scoops 9 runs between the collecting strips 18. The shovel scoops 9 are then at least partly filled with waste.

In the drawing, it can be seen that the collecting strips 18 are situated closer together towards the rear. Thus, the device 1 is able to collect manure or other waste between the collecting strips when moving across the surface. Here, the collecting strips 18 delimit a space in between which is not denoted with a separate reference numeral. When the rotating body 8 rotates, the shovel scoops 9 move through said space between the collecting strips 18 and carry along waste from the space in the process. In this case, it is advantageous that the scooped-up waste is prevented from possibly flowing out of the shovel scoops 9 as a result of the fact that the opposite collecting strip 18 is able to provide some counterpressure to prevent said flowing out. This counterpressure is increased still further by the walls 20, in particular that which is situated on the ascending side of the shovel scoops 9. The walls 20 are arranged so as to be largely concentric with the axis 11 and therefore also with the peripheral path of the shovel scoops 9. On their bottom side, the walls 20 slightly adjoin the collecting strips 18, although this is not compulsory.

A wiping device 14 removes an amount of the scooped-up waste from each shovel scoop in the upper releasing position thereof, when said shovel scoop 9 is situated above the collecting opening 7 of the collecting tray 6. In particular low-viscosity manure can also flow or fall out of the shovel scoops of its own accord and then land in the collecting tray 6. The wiping device 14 is situated along the path of the shovel scoops 9 in a position which is substantially stationary with respect to the supporting frame 2, near the upper releasing position of the shovel scoops 9. In this exemplary embodiment, the wiping device 14 comprises a wiping element or spoon 15 which is rotatable about a second rotation axis 12. The second rotation axis 12 runs substantially at right angles to the first, substantially horizontal rotation axis of the rotating body 8.

The wiping element 15 can be driven by the motor 4 which also drives the rotating body 8 and the displacement element in the collecting tray 6. In this exemplary embodiment, the common motor 4 comprises an output motor shaft which is connected to a drive belt 19 which drives the rotating body 8 and the wiping element 15 as well as the displacement element in the collecting tray 6.

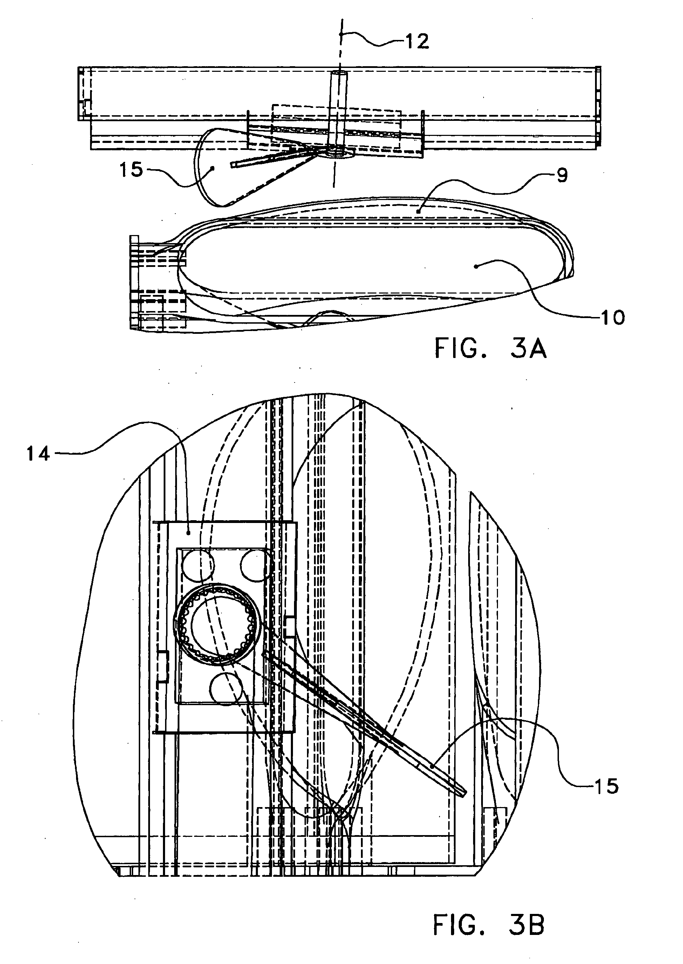

The removal of waste from the shovel scoops 9 is illustrated in more detail in Figs. 3a, 3b, 4a, 4b, 5a, 5b, 6a and 6b. In Figs. 3a and 3b, the wiping element 15 is in a starting position outside the circular path of the shovel scoops 9. Through rotation of the rotating body 8, one of the shovel scoops 9 approaches the wiping element 15. By rotation, the wiping element 15 is moved from said starting position into the path of the shovel scoops 9 while the rotating body 8 rotates. In this case, the wiping element 15 rotates between two adjacent shovel scoops 9 in the path of the shovel scoops 9.

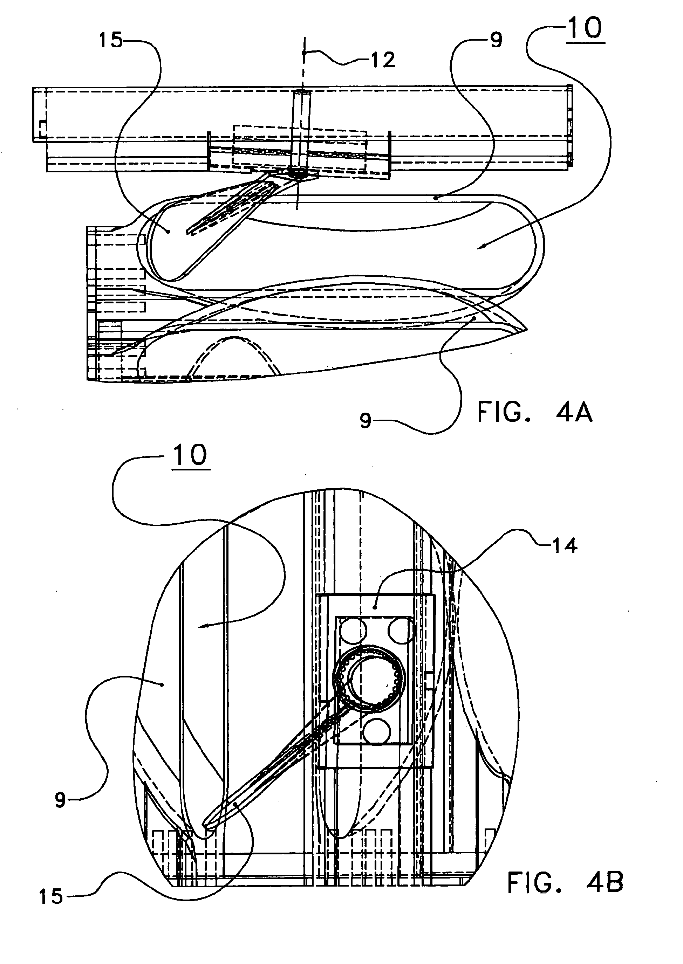

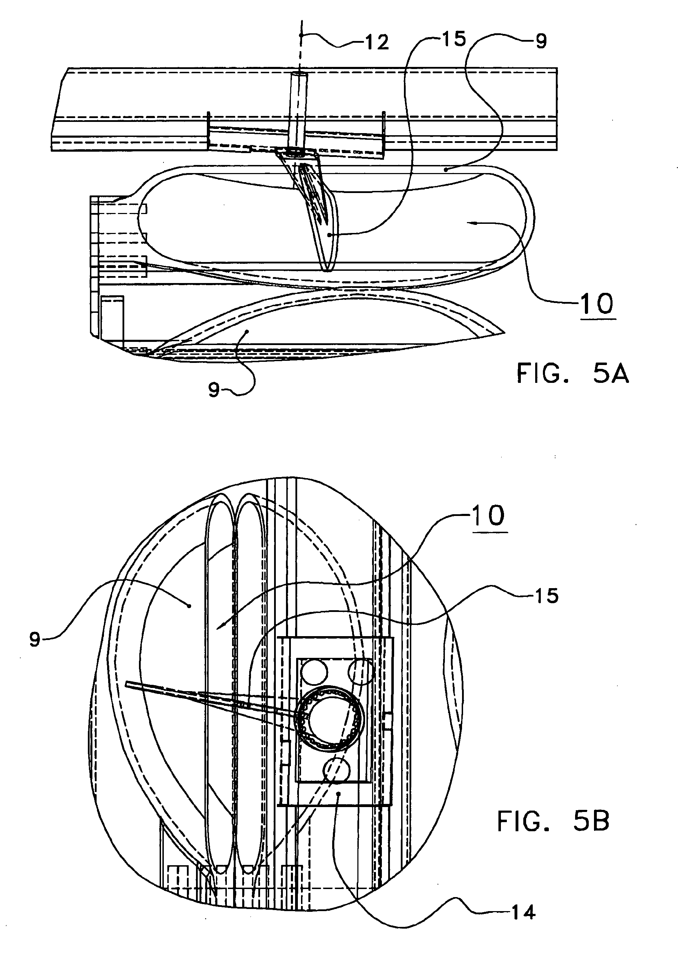

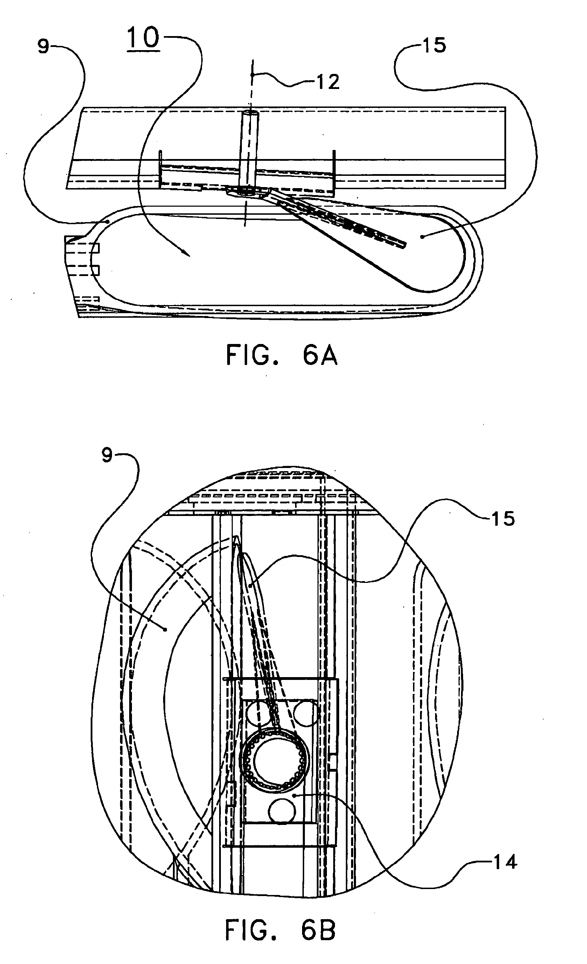

Subsequently, the wiping element 15 moves through the open end 10 into said approaching and subsequently passing shovel scoop 9 (see Figs. 4a and 4b). Subsequently, the wiping element 15 moves through said passing shovel scoop 9 in order to remove at least an amount of the scooped-up waste present therein. In Figs. 5a and 5b, the wiping element 15 is situated in the centre of the passing shovel scoop 9, while Figs. 6a and 6b show how the wiping element 15 moves out of the passing shovel scoop 9. The wiping element 15 then turns from the starting position through an angle of approximately 180° from the front to the back through the passing shovel scoop 9. The waste wiped of the passing shovel scoop 9 falls through the collecting opening 7 and into the collecting tray 6.

After the wiping element 15 has been moved out of the passing shovel scoop 9, the wiping element 15 moves away from the path of the shovel scoops 9, so that the wiped shovel scoop 9 can pass the wiping element 15. The wiping element 15 subsequently rotates behind said wipedshovel scoop 9 and in front of the shovel scoop 9 which is filled with scooped-up waste and which, viewed in the direction of rotation A of the rotating body 8, is next behind said wiped shovel scoop 9 which has passed. In this case, the wiping element rotates through an angle of approximately 180° from the back to the front to return to the starting position which is illustrated in Figs. 3a and 3b.

The wiping element thus carries out a complete revolution between the shovel scoops 9 and in each case wiped one of the shovel scoops 9 in order to remove at least an amount of waste therefrom.

In this exemplary embodiment, the rotating body 8 with the shovel scoops 9 and the wiping element 15 which are attached thereto is driven by the motor 4 in order to carry out a uniform rotary movement. In this case, the second rotation axis 12 of the wiping element 15 is set with respect to the first rotation axis 11 of the rotating body 8 so that the wiping element 15 moves relatively far into the shovel scoops 9 without touching the shovel scoops 9.

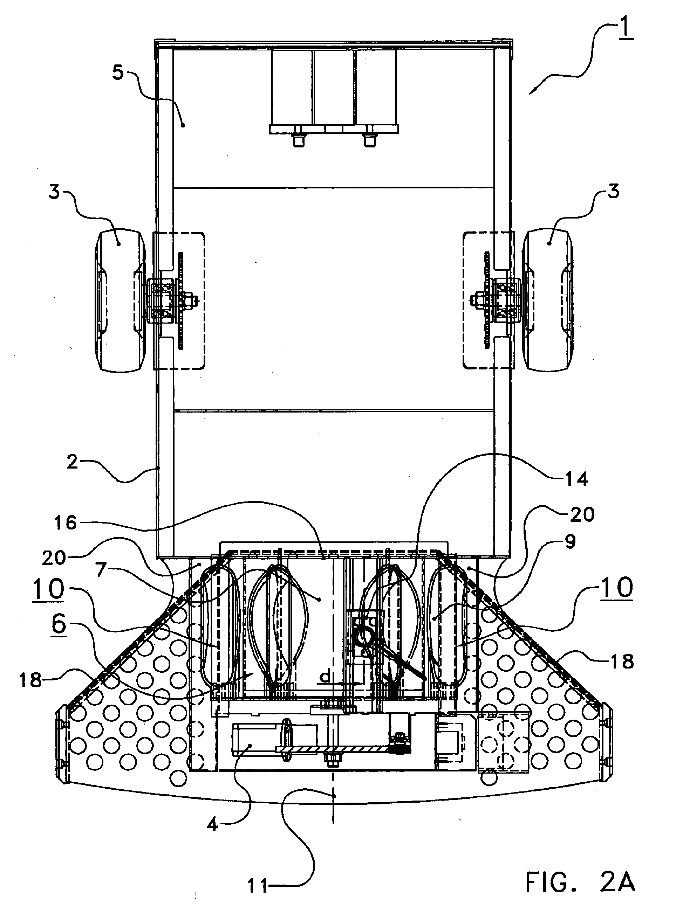

To this end, the rotation point of the wiping element 15 which is determined by the second rotation axis is arranged at a small distance d (see Fig. 2a) from the vertical longitudinal plane of the vehicle 1. In this exemplary embodiment, the vertical longitudinal plane of the vehicle 1 is determined by a vertical plane through the horizontal first rotation axis 11 of the rotating body 8.

Therefore, the second rotation axis 12 of the wiping element 15 is offset with respect to the horizontal first rotation axis 11 of the rotating body 8. As the wiping element 15 has a certain length, the rotation of the wiping element 15 can be set by adjusting said distance d so that the wiping element 15, in the upper releasing position of the passing shovel scoop 9, is situated substantially in the centre of said shovel scoop 9, as is illustrated in Figs. 5a and 5b.

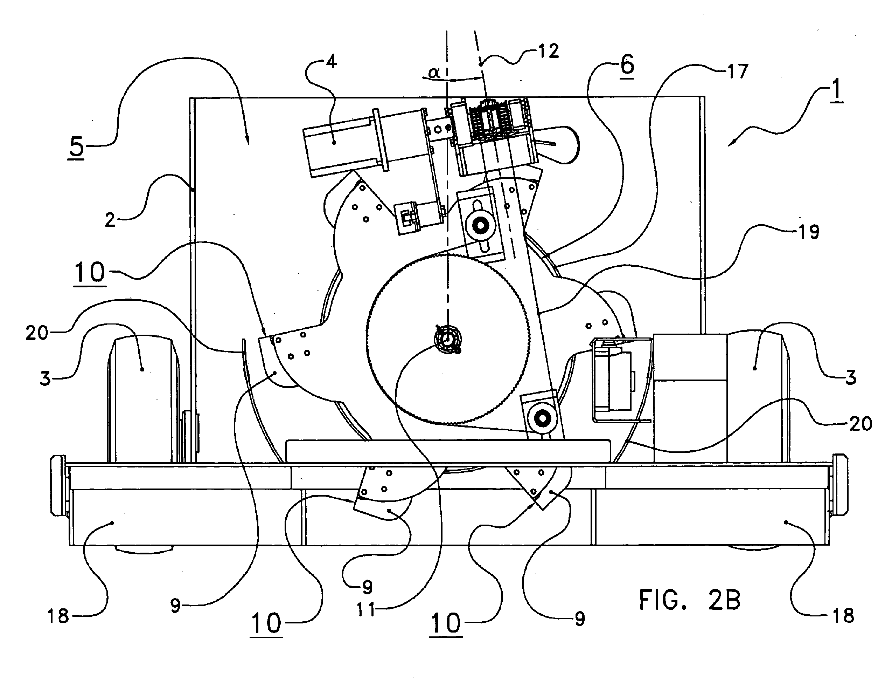

In addition, in this exemplary embodiment, the second rotation axis 12 of the wiping element 15 is not exactly vertical. The second rotation axis 12 of the wiping element 15 is arranged at a first angle α (see Fig. 2b) to the vertical longitudinal plane. Said first angle α is such that the second rotation axis 15, viewed from the vertical and viewed in a vertical transverse plane which is at right angles to the vertical longitudinal plane, is tilted opposite to the direction of rotation A of the rotating body 15.

As a result thereof, the wiping element 15 moves slightly from the top to the bottom when it is being rotated, from the starting position next to the path of the shovel scoops 9 to approximately the centre position in the passing shovel scoop 9. While the wiping element 15 rotates from said centre position out the passing shovel scoop 9, the wiping element 15 subsequently moves slightly from the bottom to the top. The first angle α is, for example, between 0-30°.

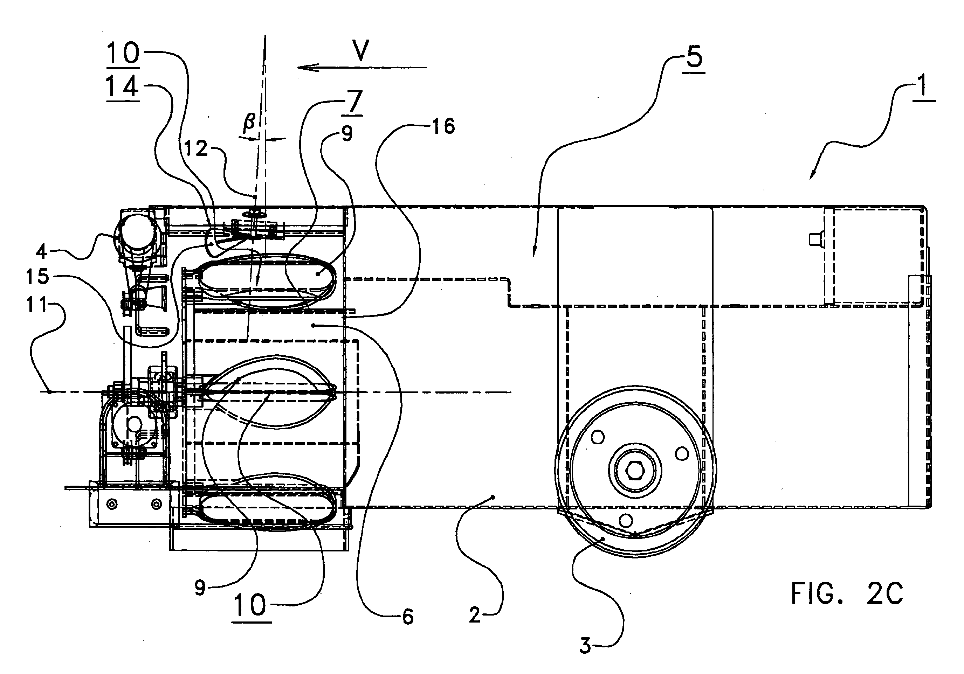

Furthermore, the second rotation axis 12 may extend at a second angle β (see Fig. 2c) to the vertical transverse plane. Said second angle β is such that the second rotation axis 12, viewed in the direction of movement V of the vehicle 1, runs obliquely downwards. Thus, the rotary movement of the wiping element 15 can be adapted to the rotary movement of the passing shovel scoop 9 more accurately, so that the wiping element 15 wipes out the passing shovel scoop 9 to a relatively deep level without damaging the passing shovel scoop. The second angle β is, for example, between 0-30°.

In order to further improve the removal of waste from the shovel scoops 9, the bowl-shaped wall of each shovel scoop 9 may have a curved inner surface, the curvature of which is such that the wiping element 15, when it is rotated about the second rotation axis 12 and when the rotating body 8 rotates about the first rotation axis 11, moves through the shovel scoop 9 at a substantially constant distance from the curved inner surface. The shape of the shovel scoops 9 is then asymmetrical.

The invention is not limited to the exemplary embodiment illustrated in the figures. The person skilled in the art can make various modifications which fall within the scope of the invention as defined in the appended claims.

## Claims

1. Device for removing waste, in particular manure, from a surface, for example from a floor of an animal shed, which device comprises:
- a supporting frame (2) which is displaceable across the surface,
- a motor (4) which is fitted to the supporting frame (2),
- collecting strips (18) which, viewed in an intended direction of movement, are fitted in front of the supporting frame and run towards each other at the back, and are designed to push together the manure into a space delimited by the collecting strips when the device is moving,
- a rotating body (8) which is connected to the supporting frame (2) so as to be rotatable in a direction of rotation about a substantially horizontal first rotation axis (11), which rotating body (8) is drivable by the motor (4),
- a plurality of shovel scoops (9) for scooping up waste from the surface, which shovel scoops (9) are attached to the rotating body (8) in the circumferential direction at a distance apart and which shovel scoops (9), during rotation of the rotating body (8), move along a path which runs at least partly along the surface, and which shovel scoops (9) each comprise a bowl-shaped wall which delimits an internal holding space for holding scooped-up waste and which shovel scoops (9) each comprise an open end (10) which is directed substantially in the direction of rotation of the rotating body (8),
wherein the first rotation axis extends substantially horizontally and forwards, and
wherein the rotating body (8) is fitted in such a manner with respect to the supporting frame (2) that said path of the shovel scoops extends into the space delimited by the collecting strips, and furthermore comprising a wiping device (14) for wiping waste out of in each case one of the shovel scoops (9) upon rotation of the rotating body (8).

2. Device according to Claim 1, wherein a wall which extends above the collecting strip is provided above at least said collecting strip which is situated on the side of the space delimited by the collecting strips where the shovel scoops move upwards during rotation.

3. Device according to Claim 2, wherein said wall extends between a peripheral path of the shovel scoops and a vertical plane at a predetermined distance from the peripheral path.

4. Device according to Claim 2 or 3, wherein said wall extends parallel to or concentrically with respect to the peripheral path.

5. Device according to one of Claims 2-4, wherein said wall extends from the collecting strip to a height where the open end of the shovel scoops makes an angle of less than 30° to the horizontal, said open end preferably being horizontal.

6. Device according to Claim 1, wherein the wiping device (14) is fitted to the supporting frame (2) along the path of the shovel scoops (9) at a position which is substantially stationary with respect to the supporting frame (2), which wiping device (14) is provided with a wiping element (15) which can be moved and driven in such a way that the wiping element (15), for each shovel scoop (9) which passes the wiping device (14) during rotation of the rotating body (8) in each case moves from a starting position outside the path of the shovel scoops (9) into the path of the shovel scoops (9), moves through the open end (10) of said passing shovel scoop (9) into the internal holding space of said passing shovel scoop (9) and subsequently moves through the internal holding space of said passing shovel scoop (9) in order to wiping at least an amount of waste scooped up by said passing shovel scoop (9) out of the latter, and the wiping element (15) then moves out of said passing shovel scoop (9) and subsequently out of the path of the shovel scoops (9) in order to allow said passing shovel scoop (9) to pass the wiping device (14).

7. Device according to Claim 6, wherein the wiping element (15) can be moved and driven in such a way that the wiping element (15), for each shovel scoop (9) which passes the wiping device (14) while the rotating body (8) is rotating, in each case moves back through the path of the shovel scoops (9) to the starting position outside the path of the shovel scoops (9) after said passing shovel scoop (9) has passed beyond the wiping device (14).

8. Device according to one of the preceding claims, wherein the shovel scoops (9) are spaced apart and arranged in the circumferential direction, substantially according to a circle, with the path of the shovel scoops (9) being substantially circular.

9. Device according to one of the preceding claims, wherein the device is a vehicle (1) and wherein the supporting frame (2) can travel across the surface in a direction of travel.

10. Device according to one of Claims 1-9, wherein the shovel scoops (9) move from a lower scooping-up position to an upper releasing position and back during rotation of the rotating body (8), and wherein the wiping device (14) is fitted near the upper releasing position of the shovel scoops (9).

11. Device according to one of Claims 1-10, wherein the device is provided with a collecting tray (6) for collecting waste which is wiped of each shovel scoop (9) when the wiping device (14) passes, and wherein the collecting tray (6) is provided with a collecting opening (7) which is arranged under the wiping device (14).

12. Device according to Claim 11, wherein the device is provided with a storage tank (5) which is connected to the collecting tray (6) via a passage opening (16), the collecting tray (6) being provided with a displacement element for moving the waste collected in the collecting tray (6) to the storage tank (5).

13. Device according to Claim 12, wherein the collecting tray (6) comprises a substantially cylindrical peripheral wall, in which a lateral opening is provided in order to form the collecting opening (7) on the top side of the collecting tray (6), and wherein the displacement element comprises a conveyor screw for forcing the waste collected in the collecting tray (6) through the passage opening (16) to the storage tank (5).

14. Device according to one of Claims 6-13, wherein the wiping element (15) is connected to the wiping device (14) so as to be rotatable about a second rotation axis (12), wherein the wiping element (15) can be moved and driven in such a way that the wiping element (15), when it rotates about the second rotation axis (12) and when the rotating body (8) rotates about the first rotation axis (11), carries out a complete revolution for each shovel scoop (9) which passes the wiping device (14), in each case from the starting position outside the path of the shovel scoops (9).

15. Device according to one of the preceding claims, wherein the rotating body (8) comprises a flexible belt, such as a caterpillar track, and wherein the belt extends substantially parallel to the surface over a predetermined distance.

16. Method for removing waste from a surface, for example from a floor of an animal shed, which method comprises:
• displacing a device (1) according to one of Claims 1-15 across the surface,
• rotating the rotating body (8) about the substantially horizontal first rotation axis (11) in a direction of rotation by driving the rotating body (8) via the motor (4).

17. Method according to Claim 16, wherein the device comprises a device according to Claim 6, and wherein the method comprises displacing the wiping element (15) during rotation of the rotating body (8) for each shovel scoop (9) which passes the wiping device (14), in each case from a starting position outside the path of the shovel scoops (9) into the path of the shovel scoops (9), through the open end of said passing shovel scoop (9) into the internal holding space of said passing shovel scoop (9) and subsequently through the internal holding space of said passing shovel scoop (9) in order to wiping out at least an amount of the waste therefrom which was scooped up by said passing shovel scoop (9), thereafter moving the wiping element (15) from said passing shovel scoop (9) and subsequently away from the path of the shovel scoops (9) in order to allow said passing shovel scoop (9) to pass the wiping device (14).

## Patentansprüche

1. Vorrichtung zur Beseitigung von Unrat, insbesondere Dung, von einer Oberfläche, beispielsweise von einem Boden eines Tierstalls, wobei die Vorrichtung Folgendes umfasst:
- einen Stützrahmen (2), der über die Oberfläche verschiebbar ist,
- einen Motor (4), der am Stützrahmen (2) angebracht ist,
- Sammelleisten (18), die, in einer beabsichtigten Bewegungsrichtung gesehen, vor dem Stützrahmen angebracht sind und hinten aufeinander zulaufen und dazu ausgelegt sind, den Dung zusammenzuschieben in einen von den Sammelleisten begrenzten Raum, wenn sich die Vorrichtung bewegt,
- einen sich drehenden Körper (8), der mit dem Stützrahmen (2) verbunden ist, so dass er sich in einer Drehrichtung um eine im Wesentlichen horizontale erste Rotationsachse (11) drehen kann, wobei der sich drehende Körper (8) von dem Motor (4) angetrieben werden kann,
- mehrere Schaufellöffel (9) zum Aufschaufeln von Unrat von der Oberfläche, wobei die Schaufellöffel (9) an dem sich drehenden Körper (8) in der Umfangsrichtung beabstandet angebracht sind und sich während des Drehens des sich drehenden Körpers (8) entlang einer Bahn bewegen, die mindestens teilweise entlang der Oberfläche verläuft, und wobei die Schaufellöffel (9) jeweils eine schüsselförmige Wand umfassen, die einen inneren Halteraum zum Halten von aufgeschaufeltem Unrat begrenzt, sowie jeweils ein offenes Ende (10) umfassen, das im Wesentlichen in der Drehrichtung des sich drehenden Körpers (8) ausgerichtet ist,
wobei sich die erste Rotationsachse im Wesentlichen horizontal und nach vorne erstreckt, und wobei der sich drehende Körper (8) so bezüglich des Stützrahmens (2) angebracht ist, dass sich die Bahn der Schaufellöffel in den durch die Sammelleisten begrenzten Raum erstreckt, und ferner eine Wischvorrichtung (14) zum Wischen von Unrat aus jeweils einem der Schaufellöffel (9) bei Drehung des sich drehenden Körpers (8) umfasst.

2. Vorrichtung nach Anspruch 1, wobei eine sich über der Sammelleiste erstreckende Wand mindestens über der Sammelleiste vorgesehen ist, die an der Seite des von den Sammelleisten begrenzten Raums angeordnet ist, an der sich die Schaufellöffel während des Drehens nach oben bewegen.

3. Vorrichtung nach Anspruch 2, wobei sich die Wand zwischen einer Umfangsbahn der Schaufellöffel und einer vertikalen Ebene in einem vorbestimmten Abstand von der Umfangsbahn erstreckt.

4. Vorrichtung nach Anspruch 2 oder 3, wobei sich die Wand parallel zu oder konzentrisch bezüglich der Umfangsbahn erstreckt.

5. Vorrichtung nach einem der Ansprüche 2 - 4, wobei sich die Wand von der Sammelleiste zu einer Höhe erstreckt, auf der das offene Ende der Schaufellöffel einen Winkel von weniger als 30° zur Horizontalen einnimmt, wobei das offene Ende vorzugsweise horizontal ist.

6. Vorrichtung nach Anspruch 1, wobei die Wischvorrichtung (14) entlang der Bahn der Schaufellöffel (9) an einer Position am Stützrahmen (2) angebracht ist, die bezüglich des Stützrahmens (2) im Wesentlichen stationär ist, wobei die Wischvorrichtung (14) mit einem Wischelement (15) versehen ist, das so bewegt und angetrieben werden kann, dass sich das Wischelement (15) für jeden Schaufellöffel (9), der während der Drehung des sich drehenden Körpers (8) an der Wischvorrichtung (14) vorbeigeht, jeweils von einer Startposition außerhalb der Bahn der Schaufellöffel (9) in die Bahn der Schaufellöffel (9) bewegt, sich durch das offene Ende (10) des vorbeigehenden Schaufellöffels (9) in den inneren Halteraum des vorbeigehenden Schaufellöffels (9) bewegt und sich anschließend durch den inneren Halteraum des vorbeigehenden Schaufellöffels (9) bewegt, um mindestens eine Menge an von dem vorbeigehenden Schaufellöffel (9) aufgeschaufelten Unrat aus diesem herauszuwischen, wonach sich das Wischelement (15) aus dem vorbeigehenden Schaufellöffel (9) heraus und anschlieβend aus der Bahn der Schaufellöffel (9) bewegt, damit der vorbeigehende Schaufellöffel (9) an der Wischvorrichtung (14) vorbeigehen kann.

7. Vorrichtung nach Anspruch 6, wobei das Wischelement (15) so bewegt und angetrieben werden kann, dass sich das Wischelement (15) für jeden Schaufellöffel (9), der während der Drehung des sich drehenden Körpers (8) an der Wischvorrichtung (14) vorbeigeht, jeweils durch die Bahn der Schaufellöffel (9) zurück zur Startposition außerhalb der Bahn der Schaufellöffel (9) bewegt, nachdem der vorbeigehende Schaufellöffel (9) über die Wischvorrichtung (14) hinaus gegangen ist.

8. Vorrichtung nach einem der vorhergehenden Ansprüche, wobei die Schaufellöffel (9) in der Umfangsrichtung im Wesentlichen in einem Kreis beabstandet und angeordnet sind, wobei die Bahn der Schaufellöffel (9) im Wesentlichen kreisförmig ist.

9. Vorrichtung nach einem der vorhergehenden Ansprüche, wobei die Vorrichtung ein Fahrzeug (1) ist und wobei der Stützrahmen (2) in einer Fahrtrichtung über die Oberfläche fahren kann.

10. Vorrichtung nach einem der Ansprüche 1 - 9, wobei sich die Schaufellöffel (9) während des Drehens des sich drehenden Körpers (8) von einer unteren Aufschaufelposition in eine obere Freigabeposition und zurück bewegen und wobei die Wischvorrichtung (14) in der Nähe der oberen Freigabeposition der Schaufellöffel (9) angebracht ist.

11. Vorrichtung nach einem der Ansprüche 1 - 10, wobei die Vorrichtung mit einer Sammelschale (6) zum Sammeln von Unrat versehen ist, der von jedem Schaufellöffel (9) gewischt wird, wenn die Wischvorrichtung (14) vorbeigeht, und wobei die Sammelschale (6) mit einer Sammelöffnung (7) versehen ist, die unter der Wischvorrichtung (14) angeordnet ist.

12. Vorrichtung nach Anspruch 11, wobei die Vorrichtung mit einem Lagertank (5) versehen ist, der über eine Durchgangsöffnung (16) mit der Sammelschale (6) verbunden ist, wobei die Sammelschale (6) mit einem Verschiebeelement versehen ist, um den in der Sammelschale (6) gesammelten Unrat zum Lagertank (5) zu bewegen.

13. Vorrichtung nach Anspruch 12, wobei die Sammelschale (6) eine im Wesentlichen zylindrische Umfangswand umfasst, in der zum Bilden der Sammelöffnung (7) an der oberen Seite der Sammelschale (6) eine seitliche Öffnung vorgesehen ist, und wobei das Verschiebeelement eine Förderschnecke umfasst, um den in der Sammelschale (6) gesammelten Unrat durch die Durchgangsöffnung (16) zum Lagertank (5) zu zwingen.

14. Vorrichtung nach einem der Ansprüche 6 - 13, wobei das Wischelement (15) mit der Wischvorrichtung (14) verbunden ist, so dass es um eine zweite Rotationsachse (12) drehbar ist, wobei das Wischelement (15) so bewegt und angetrieben werden kann, dass das Wischelement (15), wenn es sich um die zweite Rotationsachse (12) dreht und wenn sich der sich drehende Körper (8) um die erste Rotationsachse (11) dreht, für jeden an der Wischvorrichtung (14) vorbeigehenden Schaufellöffel (9) jeweils von der Startposition außerhalb der Bahn der Schaufellöffel (9) aus eine vollständige Umdrehung ausführt.

15. Vorrichtung nach einem der vorhergehenden Ansprüche, wobei der sich drehende Körper (8) ein flexibles Band wie eine Raupenkette umfasst und wobei sich das Band über eine vorbestimmte Strecke im Wesentlichen parallel zu der Oberfläche erstreckt.

16. Verfahren zur Beseitigung von Unrat von einer Oberfläche, beispielsweise von einem Boden eines Tierstalls, wobei das Verfahren Folgendes umfasst:
• Verschieben einer Vorrichtung (1) nach einem der Ansprüche 1 - 15 über die Oberfläche,
• Drehen des sich drehenden Körpers (8) um die im Wesentlichen horizontale erste Rotationsachse (11) in einer Drehrichtung durch Antreiben des sich drehenden Körpers (8) über den Motor (4).

17. Verfahren nach Anspruch 16, wobei die Vorrichtung eine Vorrichtung nach Anspruch 6 umfasst und wobei das Verfahren Folgendes umfasst: Verschieben des Wischelements (15) während der Drehung des sich drehenden Körpers (8) für jeden Schaufellöffel (9), der an der Wischvorrichtung (14) vorbeigeht, jeweils von einer Startposition außerhalb der Bahn der Schaufellöffel (9) in die Bahn der Schaufellöffel (9), durch das offene Ende des vorbeigehenden Schaufellöffels (9) in den inneren Halteraum des vorbeigehenden Schaufellöffels (9) und anschließend durch den inneren Halteraum des vorbeigehenden Schaufellöffels (9), um mindestens eine Menge an von dem vorbeigehenden Schaufellöffel (9) aufgeschaufelten Unrat aus diesem herauszuwischen, und danach Bewegen des Wischelements (15) aus dem vorbeigehenden Schaufellöffel (9) heraus und anschließend aus der Bahn der Schaufellöffel (9) heraus, damit der vorbeigehende Schaufellöffel (9) an der Wischvorrichtung (14) vorbeigehen kann.

## Revendications

1. Dispositif pour éliminer des déchets, en particulier du fumier, d'une surface, par exemple d'un plancher d'une étable, ledit dispositif comprenant :
- un cadre de support (2) pouvant être déplacé en travers de la surface,
- un moteur (4) ajusté sur le cadre de support (2),
- des bandes de collecte (18), qui, vues dans une direction de mouvement prévue, sont ajustées à l'avant du cadre de support et s'étendent l'une vers l'autre à l'arrière, et sont conçues pour pousser et rassembler le fumier dans un espace délimité par les bandes de collecte lorsque le dispositif se déplace,
- un corps rotatif (8) qui est raccordé au cadre de support (2) de manière à pouvoir tourner dans un sens de rotation autour d'un premier axe de rotation substantiellement horizontal (11), lequel corps rotatif (8) peut être entraîné par le moteur (4),
- une pluralité de godets de pelletage (9) destinés à pelleter les déchets depuis la surface, lesdits godets de pelletage (9) étant attachés au corps rotatif (8) dans la direction circonférentielle à distance les uns des autres et lesdits godets de pelletage (9), au cours de la rotation du corps rotatif (8), se déplaçant le long d'une trajectoire qui s'étend au moins en partie le long de la surface, et lesdits godets de pelletage (9) comprenant chacun une paroi en forme de bol qui délimite un espace de réception interne pour recueillir les déchets pelletés et lesdits godets de pelletage (9) comprenant chacun une extrémité ouverte (10) qui est orientée substantiellement dans le sens de rotation du corps rotatif (8),
le premier axe de rotation s'étendant substantiellement horizontalement et vers l'avant, et
le corps rotatif (8) étant ajusté par rapport au cadre de support (2) de telle sorte que ladite trajectoire des godets de pelletage s'étende dans l'espace délimité par les bandes de collecte, et comprenant en outre un dispositif d'essuyage (14) pour essuyer les déchets hors de l'un des godets de pelletage respectif (9) au cours de la rotation du corps rotatif (8).

2. Dispositif selon la revendication 1, dans lequel une paroi qui s'étend au-dessus de la bande de collecte est prévue au-dessus d'au moins ladite bande de collecte qui est située sur le côté de l'espace délimité par les bandes de collecte où les godets de pelletage se déplacent vers le haut au cours de la rotation.

3. Dispositif selon la revendication 2, dans lequel ladite paroi s'étend entre une trajectoire périphérique des godets de pelletage et un plan vertical à une distance prédéterminée de la trajectoire périphérique.

4. Dispositif selon la revendication 2 ou 3, dans lequel ladite paroi s'étend parallèlement à ou de manière concentrique à la trajectoire périphérique.

5. Dispositif selon l'une quelconque des revendications 2 à 4, dans lequel ladite paroi s'étend depuis la bande de collecte jusqu'à une hauteur à laquelle l'extrémité ouverte des godets de pelletage forme un angle inférieur à 30° avec l'horizontale, ladite extrémité ouverte étant de préférence horizontale.

6. Dispositif selon la revendication 1, dans lequel le dispositif d'essuyage (14) est ajusté au cadre de support (2) le long de la trajectoire des godets de pelletage (9) en une position qui est substantiellement stationnaire par rapport au cadre de support (2), lequel dispositif d'essuyage (14) étant pourvu d'un élément d'essuyage (15) qui peut être déplacé et entraîné de telle sorte que l'élément d'essuyage (15), pour chaque godet de pelletage (9) qui passe par le dispositif d'essuyage (14) au cours de la rotation du corps rotatif (8), se déplace dans chaque cas depuis une position de départ à l'extérieur de la trajectoire des godets de pelletage (9) jusque dans la trajectoire des godets de pelletage (9), se déplace à travers l'extrémité ouverte (10) dudit godet de pelletage qui passe (9) jusque dans l'espace de réception interne dudit godet de pelletage qui passe (9) et se déplace ensuite à travers l'espace de réception interne dudit godet de pelletage qui passe (9) afin d'essuyer au moins une certaine quantité de déchets pelletés par ledit godet de pelletage qui passe (9) hors de celui-ci, et l'élément d'essuyage (15) se déplaçant alors hors dudit godet de pelletage qui passe (9) et ensuite hors de la trajectoire des godets de pelletage (9) afin de permettre audit godet de pelletage qui passe (9) de passer au-delà du dispositif d'essuyage (14).

7. Dispositif selon la revendication 6, dans lequel l'élément d'essuyage (15) peut être déplacé et entraîné de telle sorte que l'élément d'essuyage (15), pour chaque godet de pelletage (9) qui passe par le dispositif d'essuyage (14) au cours de la rotation du corps rotatif (8), se déplace dans chaque cas de manière à revenir à travers la trajectoire des godets de pelletage (9) jusqu'à la position de départ à l'extérieur de la trajectoire des godets de pelletage (9) après que ledit godet de pelletage qui passe (9) est passé au-delà du dispositif d'essuyage (14).

8. Dispositif selon l'une quelconque des revendications précédentes, dans lequel les godets de pelletage (9) sont espacés et agencés dans la direction circonférentielle, substantiellement suivant un cercle, la trajectoire des godets de pelletage (9) étant substantiellement circulaire.

9. Dispositif selon l'une quelconque des revendications précédentes, dans lequel le dispositif est un véhicule (1) et dans lequel le cadre de support (2) peut se déplacer en travers de la surface dans une direction de déplacement.

10. Dispositif selon l'une quelconque des revendications 1 à 9, dans lequel les godets de pelletage (9) se déplacent depuis une position de pelletage inférieure jusqu'à une position de libération supérieure et reviennent au cours de la rotation du corps rotatif (8), et dans lequel le dispositif d'essuyage (14) est ajusté à proximité de la position de libération supérieure des godets de pelletage (9).

11. Dispositif selon l'une quelconque des revendications 1 à 10, dans lequel le dispositif est pourvu d'un bac de collecte (6) pour recueillir les déchets qui sont essuyés de chaque godet de pelletage (9) lorsque le dispositif d'essuyage (14) passe, et dans lequel le bac de collecte (6) est pourvu d'une ouverture de collecte (7) qui est prévue sous le dispositif d'essuyage (14).

12. Dispositif selon la revendication 11, dans lequel le dispositif est pourvu d'un réservoir de stockage (5) qui est raccordé au bac de collecte (6) par le biais d'une ouverture de passage (16), le bac de collecte (6) étant pourvu d'un élément de déplacement pour déplacer les déchets recueillis dans le bac de collecte (6) jusqu'au réservoir de stockage (5).

13. Dispositif selon la revendication 12, dans lequel le bac de collecte (6) comprend une paroi périphérique substantiellement cylindrique, dans laquelle une ouverture latérale est réalisée afin de former l'ouverture de collecte (7) sur le côté supérieur du bac de collecte (6), et dans lequel l'élément de déplacement comprend une vis d'alimentation pour forcer les déchets recueillis dans le bac de collecte (6) à travers l'ouverture de passage (16) jusqu'au réservoir de stockage (5).

14. Dispositif selon l'une quelconque des revendications 6 à 13, dans lequel l'élément d'essuyage (15) est raccordé au dispositif d'essuyage (14) de manière à pouvoir tourner autour d'un deuxième axe de rotation (12), l'élément d'essuyage (15) pouvant être déplacé et entraîné de telle sorte que l'élément d'essuyage (15), lorsqu'il tourne autour du deuxième axe de rotation (12) et que le corps rotatif (8) tourne autour du premier axe de rotation (11), effectue un tour complet pour chaque godet de pelletage (9) qui passe par le dispositif d'essuyage (14), dans chaque cas depuis la position de départ à l'extérieur de la trajectoire des godets de pelletage (9).

15. Dispositif selon l'une quelconque des revendications précédentes, dans lequel le corps rotatif (8) comprend une courroie flexible telle qu'une chaîne de chenille, et dans lequel la courroie s'étend substantiellement parallèlement à la surface sur une distance prédéterminée.

16. Procédé pour éliminer des déchets d'une surface, par exemple d'un plancher d'une étable, lequel procédé comprend :
- déplacer un dispositif (1) selon l'une quelconque des revendications 1 à 15 en travers de la surface,
- faire tourner le corps rotatif (8) autour du premier axe de rotation substantiellement horizontal (11) dans un sens de rotation en entraînant le corps rotatif (8) par le biais du moteur (4).

17. Procédé selon la revendication 16, dans lequel le dispositif comprend un dispositif selon la revendication 6, et dans lequel le procédé comprend le déplacement de l'élément d'essuyage (15) au cours de la rotation du corps rotatif (8) pour chaque godet de pelletage (9) qui passe par le dispositif d'essuyage (14), dans chaque cas depuis une position de départ à l'extérieur de la trajectoire des godets de pelletage (9) jusque dans la trajectoire des godets de pelletage (9), à travers l'extrémité ouverte dudit godet de pelletage qui passe (9) jusque dans l'espace de réception interne dudit godet de pelletage qui passe (9) et ensuite à travers l'espace de réception interne dudit godet de pelletage qui passe (9) afin d'essuyer au moins une certaine quantité de déchets pelletés par ledit godet de pelletage qui passe (9) hors de celui-ci, puis le déplacement de l'élément d'essuyage (15) depuis ledit godet de pelletage qui passe (9) et ensuite à l'écart de la trajectoire desdits godets de pelletage (9) afin de permettre audit godet de pelletage qui passe (9) de passer au-delà du dispositif d'essuyage (14).
